# EUROPÄISCHE PATENTSCHRIFT

(11) **EP 2 909 553 B1**
(45) Veröffentlichungstag und Bekanntmachung des Hinweises auf die Patenterteilung: **30.11.2016**
(21) Anmeldenummer: 13779541.5
(22) Anmeldetag: 10.10.2013
(51) Int. Cl.: F27B 7/20, F27D 17/00

(54) **VERFAHREN ZUR NUTZUNG DER ABWÄRME EINER ANLAGE ZUR HERSTELLUNG VON ZEMENT ANLAGE ZUR ZEMENTHERSTELLUNG**
METHOD FOR USING THE WASTE HEAT FROM A PLANT FOR PRODUCING CEMENT AND PLANT FOR PRODUCING CEMENT
PROCÉDÉ D'UTILISATION DE LA CHALEUR PERDUE D'UNE INSTALLATION DE PRODUCTION DE CIMENT ET INSTALLATION DE PRODUCTION DE CIMENT

(30) Priorität: 17.10.2012 DE 102012020300
(43) Veröffentlichungstag der Anmeldung: 26.08.2015
(73) Patentinhaber: KHD Humboldt Wedag GmbH, 51067 Köln (DE)
(72) Erfinder: SCHÜRMANN, Heiko, 51373 Leverkusen (DE)
(86) Internationale Anmeldenummer: PCT/EP2013/071123
(87) Internationale Veröffentlichungsnummer: WO 2014/060275

(56) Entgegenhaltungen:
- DE-A1- 2 523 794
- DE-A1- 19 518 926
- US-A1- 2009 293 303

## Beschreibung

Die Erfindung betrifft ein Verfahren zur Nutzung der Abwärme einer Anlage zur Herstellung von Zement, wobei Wärme eines Prozessgases über einen ersten Wärmetauscher zur Erhitzung von Wasserdampf genutzt wird, und wobei die Anlage zur Herstellung von Zement mindestens einen Calcinator und mindestens einen zweiten Wärmetauscher, der aus einer Abfolge von Zyklonen besteht, zum Erhitzen von Rohmehl aufweist und eine Anlage zur Herstellung von Zement, wobei die Anlage zur Herstellung von Zement mindestens einen Calcinator und mindestens einen zweiten Wärmetauscher, der aus einer Abfolge von Zyklonen besteht, zum Erhitzen von Rohmehl aufweist.

Anlagen zur Herstellung von Zement weisen in der Regel einen sehr hohen Wärmeumsatz auf. Um die Abwärme einer Anlage von Zement effizient zu nutzen, wird die im Prozess entstehende Abwärme über Wärmetauscher, die in der Anlage verteilt sind, wieder in den Prozess zurück geführt. Bei der Rückführung der Wärme, der Rekuperation, ist es notwendig, dass die Wärme bei möglichst hoher Temperatur in den Prozess zurück geführt wird, um den notwendigen Energieeintrag zur Erzeugung der Prozesswärme zu verringern. Zur Rekuperation eignet sich aber nicht jede in der Anlage entstehende Abwärme. In der Regel werden nur solche Wärmequellen rekuperiert, die eine deutlich höhere Temperatur als 300°C aufweisen. Neben der Wärmerückführung in den Prozess ist es auch bekannt, die nicht rekuperierte, niederkalorische Wärme zur Trocknung von Rohmaterial zu nutzen oder zur Aufbereitung von Brennstoffen einzusetzen.

Neben der Aufbereitung von Rohmaterial und Brennstoffen ist man auch dazu übergegangen, die nicht rekuperierte Abwärme in elektrische Energie umzuwandeln. In Anlagen zur Herstellung von Zement sind dazu im Wesentlichen zwei Dampfkesselsysteme bekannt. Ein erstes System wird SP-Boiler genannt von englisch "Suspension Preheater", und dieser Boiler ist dem Zyklonwärmetauscher nachgeschaltet, der in Anlagen zur Herstellung von Zement zur Vorwärmung des Rohmehls genutzt wird. Ein zweites System wird AQC-Boiler genannt von englisch "Air Quenched Clinkercooler", der im Abluftweg des Klinkerkühlers einer Anlage zur Herstellung von Zement nachgeschaltet ist.

In der deutschen Offenlegungsschrift DE 195 18 926 A1 wird ein Verfahren zur Nutzung der Abwärme einer Anlage zur Herstellung von Zement offenbart. Nach der dort stehenden Lehre soll Wärme zwischen dem zweiten und dritten Zyklon der Anlage zur Herstellung von Zement entnommen und nach Nutzung als Restwärme wieder zurückgeführt werden. Der Druckverlust zwischen zwei unmittelbar aufeinander folgende Zyklone wird dabei sehr stark und damit lässt die Trennleistung der aufeinander folgenden Zyklone stark nach.

In der US-Patentanmeldung US 2009/293303 A1 wird ein verfahren offenbart, in welchem Wärme unspezifisch dem Vorwärmer entnommen werden soll. Eine nach Nutzung der Wärme vorhandene Restwärme wird nicht in den Prozess zurückgeführt. Bei dieser Verfahrensführung verarmt die Menge des Prozessgases, das am Eingang der Anlage zusätzlich bereits gestellt werden muss.

Schließlich wird in der deutschen Offenlegungsschrift DE 25 23 794 A1 ein verfahren offenbart, bei dem Wärme zwischen dem zweiten und dritten Zyklonwärmetauscher entnommen wird. Auch bei dieser Prozessführung wird keine Restwärme zurück in den Prozess geführt.

Diese bekannten Systeme zur Wandlung der Abwärme in elektrische Energie weisen aber in der Regel aufgrund der niedrigen Temperatur der nicht rekuperierten Abwärme eine unerwünscht geringe Wandlungseffizienz auf. Denn je höher die Temperatur der Abwärme ist, desto höher ist das Vermögen einer allgemeinen Wärmekraftmaschine, Wärme in mechanische Arbeit umzusetzen, die wiederum durch einen Generator in elektrische Energie umgewandelt wird.

Um den Wirkungsgrad bei der Wandlung von nicht rekuperierter Abwärme in elektrische Energie in einer Anlage zur Herstellung von Zement zu verbessern, wäre es mithin notwendig, eine Abwärmequelle zu schaffen, die eine wesentlich höhere Temperatur zur Verfügung stellt als es in bekannten Anlagen zur Herstellung von Zement bekannt ist.

Aufgabe der Erfindung ist es deshalb, ein Verfahren und eine dazu korrespondierende Anlage zur Herstellung von Zement zur Verfügung zu stellen, in dem eine den herstellungsprozess nicht schadende Abwärmequelle von hoher Temperatur zur Verfügung steht.

Die Aufgabe der Erfindung wird gelöst durch das Verfahren nach Anspruch 1 und Ausgestaltungen nach den darauf rückbezogenen Ansprüchen und durch eine Anlage zur Herstellung von Zement nach Anspruch 6 und Ausgestaltungen nach den darauf rückbezogenen Ansprüchen.

Erfindungsgemäß wird vorgeschlagen, der Anlage zur Herstellung von Zement Prozessgas am Gasaustritt des Calcinators, der am unteren Ende des absteigenden Ast des Calcinators angeordnet ist und/oder am gasseitigen Austritt des im Wärmetauscher in Gasströmungsrichtung ersten Zyklons zu entnehmen. Diesem Prozessgas wird Wärme in einem Dampfkessel entnommen, und das im Dampfkessel abgekühlte Prozessgas wird sodann in den im Wärmetauscher in Gasströmungsrichtung zweiten oder dritten Zyklon zurückgeführt.

In einer Anlage zur Herstellung von Zement existieren verschiedene Orte, an denen heiße Prozessgase zur Verfügung stehen. Dabei können jedoch nicht sämtliche Stellen als Entnahmestellen für Prozessgas dienen, weil der Eingriff in das Verfahren zur Herstellung von Zement damit gestört würde. Überraschender Weise hat sich in längeren Versuchsreihen gezeigt, dass eine Entnahme von heißem Prozessgas am Gasaustritt des Calcinators, der am unteren Ende des absteigenden Ast des Calcinators angeordnet ist und/oder am gasseitigen Austritt des im Wärmetauscher in Gasströmungsrichtung ersten Zyklons das Verfahren zur Herstellung von Zement nur wenig beeinflusst. Es ist bei der Entnahme einer nicht vernachlässigbaren Menge Prozesswärme zu erwarten, dass je nach Entnahmeort die Vorwärmung des Rohmehls nur unzureichend ist und damit die Calcinierungsreaktion im Calcinator nicht vollständig stattfindet. Sofern im Calcinator Wärme entnommen wird, so könnte die Calcinierungsreaktion unvollständig sein wodurch der Klinker als Zwischenprodukt einen zu hohen Anteil an freiem Kalk aufweist. Auch könnten im Rohmehl vorhandene Salze ab einem bestimmten Taupunkt verkleben und die Anlage zur Herstellung von Zement zusetzen. Schließlich könnte die in vielen Anlagen zur Herstellung von Zement durchgeführte gestufte Verbrennung unzureichend sein und damit könnte die Anlage einen zu hohen NOx-Ausstoß zeigen. Auch könnte eine kontrollierte Verbrennungsführung mit wechselnd reduktiven und oxidativen Bedingungen zur Vermeidung der CO und NOx-Emission durch die Entnahme von Prozesswärme gestört werden.

Um das dem Prozess entnommene Prozessgas wieder in den Prozess zurück zu führen, hat es sich als vorteilhaft erwiesen, wenn das abgekühlte Prozessgas in den im Wärmetauscher in Gasströmungsrichtung zweiten oder dritten Zyklon zurückgeführt wird. Erfindungsgemäß findet also in Gasströmungsrichtung gesehen am Anfang des Wärmetauschers und am Gasaustritt des Calcinators, der am unteren Ende des absteigenden Ast des Calcinators angeordnet ist, ein Prozessgaskreislauf neben dem Prozessgasfluss in der Anlage statt.

Das Prozessgas aus dem Gasaustritt des Calcinators und/oder aus dem gasseitigen Austritt des im Wärmetauscher in Gasströmungsrichtung ersten Zyklons weist hohe Mengen Staub auf. Daher ist es notwendig, den Staub aus dem Prozessgas zumindest teilweise zu entfernen. Dieser entfernte Staub ist jedoch Rohmaterial oder teilweise bis vollständig calciniertes Zwischenprodukt und kann wieder in den Prozess zurückgeführt werden. Um das im Prozess verbliebene, nicht entnommene Prozessgas nicht unerwünscht zu kühlen, wird in Ausgestaltung der Erfindung vorgeschlagen, den abgeschiedenen und auch erkalteten Staub in eine Zementmühle zu geben, wo es mit dem fertig gebrannten Klinker gemeinsam vermahlen wird. Es ist aber auch möglich, den rückzuführenden Staub in die Drehofeneinlaufkammer des Drehrohrofens aufzugeben, um den Staub als Zwischenpodukt im Drehofen zu sintern. Um die dem Prozess entnommene Prozessgasmenge zu regeln, wird erfindungsgemäß vorgeschlagen, die Gasmenge über ein Regelventil oder einen Schieber oder eine Klappe in der Gasrückführung, wo das Prozessgas zumindest teilweise entstaubt ist, zu regeln. An dieser Stelle ist das Prozessgas auch abgekühlt, wodurch eine problematische Gasmengenregelung mit heißem Gas umgangen werden kann.

Die alternative Entnahme von Prozessgas zur Nutzung der Abwärme statt der Nutzung der niederkalorischen Abwärme am Ende des Wärmetauschers oder am Ende des Klinkerkühlers lässt die niederkalorische Abwärme bestehen. In besonderer Ausgestaltung der Erfindung ist vorgesehen, zur Erzeugung von elektrischer Energie aus dem aus niederkalorischer Abwärme erzeugten Dampfs, diesen eigentlich zu kalten Dampf mit Hilfe der heißen Prozessgase aufzuheizen, um die Temperatur des mit der Abwärme aus Wärmetauscher und Klinkerkühler erzeugten Dampfs zu erhöhen. Es wird Wärme aus dem Prozessgas mit Abwärme, die gasströmungsseitig nach dem Wärmetauscher oder materialflussseitig nach dem Klinkerkühler entnommen wird, vereinigt, indem kälterer Dampf als Wärmeträger durch das erfindungsgemäß aufgeheizte Prozessgas weiter aufgeheizt wird. Dadurch wird die Abwärme der Anlage zur Herstellung von Zement in größtmöglichem Umfang genutzt.

Die Erfindung wird anhand der folgenden Figuren näher erläutert.

Es zeigt:
- Figur 1: eine Skizze einer gattungsgemäßen Anlage zur Herstellung von Zement mit eingezeichneten Entnahmeorten für heißes Prozessgas gemäß der Erfindung,
- Figur 2: eine erfindungsgemäße Anlage zur Herstellung von Zement in einer ersten Ausgestaltung,
- Figur 3: eine erfindungsgemäße Anlage zur Herstellung von Zement in einer zweiten Ausgestaltung,

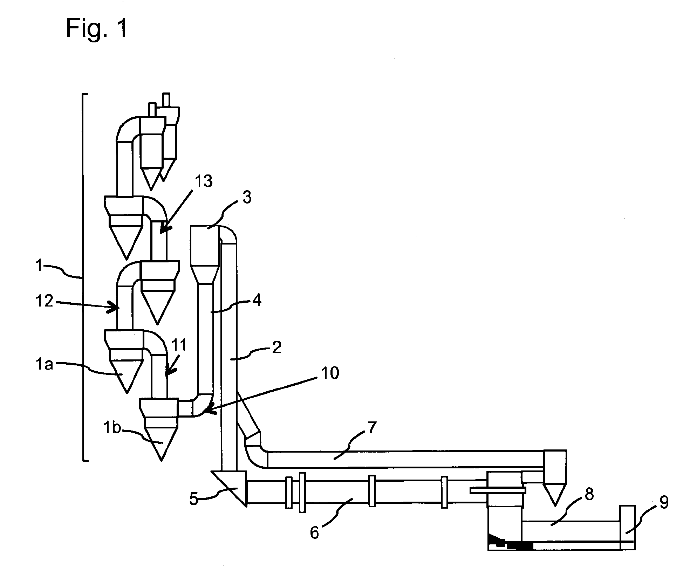

In Figur 1 ist eine Skizze einer gattungsgemäßen Anlage zur Herstellung von Zement dargestellt. Wenngleich sich der Aufbau unterschiedlicher Anlagen unterscheidet, so ist die Abfolge der Wesentlichen Elemente zwischen verschiedenen Anlagen miteinander vergleichbar. In der Anlage nach Figur 1 fließt das thermisch zu behandelnde Rohmehl vom oberen Ende des Wärmetauschers 1 über die einzelnen Zyklone in bis zum zweiten Zyklon 1 a. Hier nicht eingezeichnet, fließt das an dieser Stelle bereits vorgewärmte Rohmehl in den aufsteigenden Ast 2 des Calcinators und wird dort mit dem Prozessgas mitgerissen und in der Wärme der Drehofenabgase und einer zusätzlichen Feuerung in diesem Teil des Calcinators entsäuert. Manche Anlagen weisen eine Wirbelkammer 3 auf, in der die Prozessgase ausbrennen können, um schädliche Abgase oxidativ zu verbrennen. Nach Passage der Wirbelkammer 3 fließt das calcinierte Rohmehl in den untersten Zyklon 1 b, wo es abgetrennt und in die Drehofeneinlaufkammer 5 geleitet wird. Das Prozessgas trennt sich hier vom calcinierten Rohmehl und steigt im Wärmetauscher 1 zum Vorwärmen des Rohmehls auf, wo es dem Rohmehl entgegen fließt. Das in die Drehofeneinlaufkammer 5 eingeleitete Rohmehl fließt sodann in den Drehofen 6, wo es zu Klinker gesintert wird. Nach der Sinterung fällt der Klinker aus dem Drehofen 6 in den Klinkerkühler 8, wo der frisch gesinterte Klinker mit Hilfe von Kühlluft rasch abgeschreckt wird. Die durch den Klinker im Klinkerkühler 8 aufgewärmte Kühlluft nimmt zwei Wege. Der erste Weg führt als Sekundärluft in den Drehofen 6, hingegen führt ein zweiter Weg über die Tertiärluftleitung 7 in den aufsteigenden Ast 2 des Calcinators.

Gemäß der Erfindung ist nun vorgesehen, dass heißes Prozessgas am Gasaustritt des Calcinators entnommen wird, um daraus elektrische Energie zu erzeugen. In der vorliegenden Anlage ist der Gasaustritt am unteren Ende des absteigenden Ast 4 des Calcinators angeordnet, wo sich kurz darauf das calcinierte Rohmehl vom Prozessgas trennt. Diese Stelle ist in Figur 1 mit Bezugszeichen 10 versehen. Eine Alternative oder Kumulative zur Entnahme von heißem Prozessgas ist der gasseitige Austritt des im Wärmetauscher in Gasströmungsrichtung ersten Zyklones 1 b, das mit dem Bezugszeichen 11 versehen ist. Als Rückführort für das entnommene und im Dampfkessel abgekühlte Prozessgas ist der Gaseintritt des in Gasströmungsrichtung gesehen zweiten Zyklones 1 a oder dritten Zyklones. Das an den ausgezeichneten Stellen entnommene und wieder zurück geführte Prozessgas stört das Verfahren zur Herstellung von Zement nur wenig bis gar nicht. Wie mit dem Prozessgas weiter verfahren wird, ist in der nächsten Figur näher skizziert.

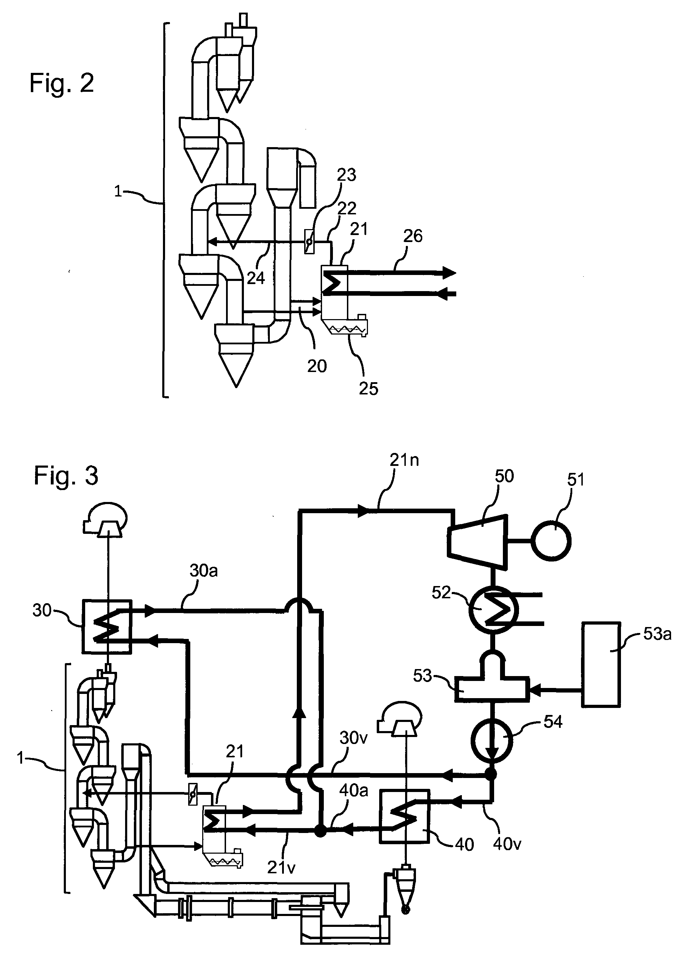

In Figur 2 ist ein Ausschnitt aus Figur 1 mit einem eingezeichneten Dampfkessel 21 dargestellt, der zur Entnahme von Wärme aus dem heißen Prozessgas vorgesehen ist. Erfindungsgemäß ist vorgesehen, dass an Stelle 10 und/oder 11 gemäß Figur 1 Prozessgas entnommen und je über eine Prozessgasleitung 20 einem Dampfkessel 21 zugeführt wird. Dort wird die Wärme des Prozessgases zur Aufheizung von Dampf verwendet und das abgekühlte Prozessgas fließt über eine Prozessgasleitung 22 zu einer Regelvorrichtung 23 und von dort über eine Prozessgasleitung 24 zum Ort der Rückführung, die in Figur 1 mit Bezugszeichen 12 versehen ist. Der zu erhitzende Dampf in Dampfleitung 26 tritt in den Dampfkessel 21 ein und verlässt ihn wieder über die Dampfleitung 26. Da das entnommene Prozessgas staubbeladen ist, ist in Ausgestaltung der Erfindung vorgesehen, dass der Staub zumindest teilweise im Dampfkessel 21 vom Prozessgas abgetrennt und über die Entstaubungsvorrichtung 25 aus dem Dampfkessel 21 entfernt wird. Der so erhaltene Staub kann wahlweise in die Drehofeneinlaufkammer 5 und/oder in eine Zementmühle gegeben werden.

In Figur 3 ist schließlich eine Gesamtskizze einer Ausgestaltung einer Anlage zur Herstellung von Zement gemeinsam mit einem Flussdiagramm dargestellt, welches die gesamte Prozessgasentnahme und seine Nutzung darstellt. Die links unten eingezeichnete Anlage zur Herstellung von Zement entspricht der Anlage gemäß den Figuren 1 und 2. Wesentlich ist hier das Flussdiagramm zur Nutzung der Abwärme. In dieser Schaltung wird niederkalorische Abwärme mit geringer Temperatur am oberen Ausgang des Wärmetauschers 1 in einem eigenen Wärmetauscher 30 und auch in einem weiteren Wärmetauscher 40 am Ende des Klinkerkühlers 8 gewonnen. Sowohl die Abwärme aus Wärmetauscher 1 wie auch die Abwärme aus Klinkerkühler 8 werden über die Dampfleitungen 30a und 40a vereint und die so gewonnene Abwärme wird als vorgewärmter Vorlauf 21v in den Dampfkessel 21 gegeben, wo das entnommene Prozessgas den Dampf in überhitzt. Der überhitzte Dampf wird aus dem Dampfkessel über die Dampfleitung 21 n in eine Turbine 50 geleitet, die mit einem Generator zur Erzeugung von elektrischer Energie verbunden ist. Im Kondensator 52 wird der Dampf abgekühlt, durchläuft einen Entlüfter 53, der mit einer chemischen Behandlungsstufe 53a gekoppelt ist und wird durch eine Pumpe 54 verdichtet. Nach Austritt aus Pumpe 54 teilt sich der abgekühlte Dampf auf in zwei Äste, wobei ein erster Ast als Vorlauf 30v zum Wärmetauscher 30 zur Nutzung der Abwärme des Wärmetauschers 1 und ein zweiter Ast als Vorlauf 40v zur Nutzung der Abwärme des Klinkerkühlers 8 geführt ist. Durch die erfindungsgemäße Schaltung wird der Dampf zur Erzeugung von elektrischer Energie zunächst durch die Abwärme mit niedriger Temperatur vorgewärmt und durch das entnommene Prozessgas weiter aufgeheizt, so dass der Dampf überhitzt ist und entsprechend eine hohe Energiemenge trägt, die in der Turbine durch Entspannen und Kondensieren in an sich bekannter Weise genutzt werden kann.

**BEZUGSZEICHENLISTE**

| | | | |
|---|---|---|---|
| 1 | Wärmetauscher | 23 | Regelvorrichtung |
| 1a | Zyklon | 24 | Prozessgasleitung, Rückführung |
| 1b | Zyklon | 25 | Entstaubungsvorrichtung |
| 2 | Calcinator (aufsteigender Ast) | 26 | Dampfleitung |
| 3 | Wirbelkammer | | |
| 4 | Calcinator (absteigender Ast) | 30 | Wärmetauscher |
| 5 | Drehofeneinlaufkammer | 30a | Dampfleitung |
| 6 | Drehofen | 30v | Vorlauf |
| 7 | Tertiärluftleitung | | |
| 8 | Klinkerkühler | 40 | Wärmetauscher |
| 9 | Klinkeraustritt | 40a | Dampfleitung |
| 10 | Entnahmestelle, 1. Alternative | 40v | Vorlauf |
| 11 | Entnahmestelle, 2. Alternative | | |
| 12 | Rückführstelle, 1. Alternative | 50 | Turbine |
| 13 | Rückführstelle, 2. Alternative | 51 | Generator |
| | | 52 | Kondensator |
| 20 | Prozessgasleitung, Entnahme | 53 | Entlüfter |
| 21 | Dampfkessel | 53a | chemische Behandlungsstufe |
| 21n | Dampfleitung, Nachlauf | 54 | Pumpe |
| 21v | Dampfleitung, Vorlauf | | |
| 22 | Dampfleitung | | |

## Patentansprüche

1. Verfahren zur Nutzung der Abwärme einer Anlage zur Herstellung von Zement w
obei Wärme eines Prozessgases über einen ersten Wärmetauscher (21) zur
Erhitzung von Wasserdampf genutzt wird, und
wobei die Anlage zur Herstellung von Zement mindestens einen Calcinator (2, 4 ) und mindestens einen zweiten Wärmetauscher (1), der aus einer Abfolge von Zyklonen (1 a, 1 b) besteht, zum Erhitzen von Rohmehl aufweist,
**dadurch gekennzeichnet, dass**
das Prozessgas
- am Gasaustritt (10) des Calcinators (4), der am unteren Ende des absteigenden Ast (4) des Calcinators angeordnet ist, und/oder
- am gasseitigen Austritt (11) des im zweiten Wärmetauscher (1) in Gasströmungsrichtung ersten Zyklones (1 b)
entnommen wird und nach Entzug der Wärme in einem Dampfkessel (21) das abgekühlte Prozessgas in den im zweiten Wärmetauscher (1) in Gasströmungsrichtung zweiten Zyklon (1a) oder dritten Zyklon zurückgeführt wird.

2. Verfahren nach Anspruch 1
**gekennzeichnet durch**
die Rückführung des im Kesselsystem aus dem Prozessgas abgeschiedenen Staubes in die Drehofeneinlaufkammer (5) eines in der Anlage vorhandenen Drehrohrofens (6) und/oder Zementmühle

3. Verfahren nach Anspruch 1,
**gekennzeichnet durch**
Vereinigung der Wärme aus dem Prozessgas mit Abwärme, die gasströmungsseitig nach dem Wärmetauscher (1) oder materialflussseitig nach dem Klinkerkühler (8) entnommen wird.

4. Verfahren nach einem der Ansprüche 1 bis 3,
**gekennzeichnet durch**
eine Regelung der Menge des entnommenen Prozessgases, wobei das Stellglied ein Gasregler (23) im abgekühlten Gasstrom in einer Rückführleitung ist.

5. Verfahren nach einem der Ansprüche 1 bis 4,
**gekennzeichnet durch**
die Entstaubung des Prozessgases im Dampfkessel (21).

6. Anlage zur Herstellung von Zement
wobei die Anlage zur Herstellung von Zement mindestens einen Calcinator (2, 4) und mindestens einen Wärmetauscher (1), der aus einer Abfolge von Zyklonen (1 a, 1 b) besteht, zum Erhitzen von Rohmehl aufweist,
**dadurch gekennzeichnet, dass**
eine Prozessgasabnahmestelle (10, 11)
- am Gasaustritt (10) des Calcinators (2), der am unteren Ende des absteigenden Ast (4) des Calcinators angeordnet ist, und/oder
- am gasseitigen Austritt (11) des im Wärmetauscher (1) in Gasströmungsrichtung ersten Zyklones (1a)
vorhanden ist, und
die Prozessgasabnahmestelle (10, 11) zu einem Dampfkessel (21) führt, wo Wärme des Prozessgases über einen Wärmetauscher zur Erhitzung von Wasserdampf genutzt wird, und wobei
eine Rückführleitung (24) für das Prozessgas in den im Wärmetauscher (1) in
Gasströmungsrichtung zweiten Zyklon (1 b) oder dritten Zyklon vorhanden ist.

7. Anlage nach Anspruch 6,
**dadurch gekennzeichnet, dass**
eine Rückführung des im Kesselsystem aus dem Prozessgas abgeschiedenen Staubes in die Drehofeneinlaufkammer (5) eines in der Anlage vorhandenen Drehrohrofens (6) und/oder Zementmühle vorhanden ist.

8. Anlage nach Anspruch 7,
**gekennzeichnet durch**
einen Vorlauf (21 v) im Dampfkessel (21), der von Abwärme, die gasströmungsseitig nach dem Wärmetauscher (1) und/oder materialflusseitig nach dem Klinkerkühler (8) entnommen ist, vorgewärmt ist.

9. Anlage nach einem der Ansprüche 6 bis 7
**dadurch gekennzeichnet, dass**
eine Regelvorrichtung zur Regelung der Menge des entnommenen Prozessgases vorhanden ist, wobei das Stellglied ein Gasregler (23) im abgekühlten Gasstrom in einer Rückführleitung (22, 24) ist.

10. Anlage nach einem der Ansprüche 6 bis 9,
**dadurch gekennzeichnet, dass**
eine Vorrichtung zur Entstaubung (25) des Prozessgases im Dampfkessel (21) vorhanden ist.

## Claims

1. Method for using the waste heat from a plant for producing cement,
wherein heat of a process gas is used for heating water vapor via a first heat exchanger (21), and wherein the plant for producing cement has at least one calcinator (2, 4) and at least one heat exchanger (1), which consists of a sequence of cyclones (1a, 1b), for heating raw meal,
**characterized in that**
the process gas is removed
- at the gas outlet (10) of the calcinator (4), which gas outlet is arranged at the lower end of the rising branch (4) of the calcinator, and/or
- at the gas-side outlet (11) of the first cyclone (1b) in the direction of gas flow in the second heat exchanger (1)
and, after extraction of the heat in a steam boiler (21), the cooled process gas is returned to the second cyclone (1a) or third cyclone in the direction of gas flow in the second heat exchanger (1).

2. Method according to Claim 1,
**characterized by**
the return of the dust separated from the process gas in the boiler system to the rotary kiln inlet chamber (5) of a rotary kiln (6) and/or a cement mill present in the plant.

3. Method according to Claim 1,
**characterized by**
combining the heat from the process gas with waste heat that is removed downstream of the heat exchanger (1) on the gas flow side or downstream of the clinker cooler (8) on the material flow side.

4. Method according to one of Claims 1 to 3, **characterized by**
controlling the amount of the process gas removed, wherein the final control element is a gas controller (23) in the cooled gas stream in a return line.

5. Method according to one of Claims 1 to 4, **characterized by**
the de-dusting of the process gas in the steam boiler (21).

6. Plant for producing cement
wherein the plant for producing cement has at least one calcinator (2, 4) and at least one heat exchanger (1), which consists of a sequence of cyclones (la, 1b), for heating raw meal,
**characterized in that**
there is a process gas removal point (10, 11)
- at the gas outlet (10) of the calcinator (2), which gas outlet is arranged at the lower end of the rising branch (4) of the calcinator, and/or
- at the gas-side outlet (11) of the first cyclone (1a) in the direction of gas flow in the heat exchanger (1),
and
the process gas removal point (10, 11) leads to a steam boiler (21), where heat of the process gas is used for heating water vapor via a heat exchanger, and wherein
there is a return line (24) for the process gas to the second cyclone (1b) or third cyclone in the direction of gas flow in the heat exchanger (1).

7. Plant according to Claim 6,
**characterized in that**
there is a return of the dust separated from the process gas in the boiler system to the rotary kiln inlet chamber (5) of a rotary kiln (6) and/or a cement mill present in the plant.

8. Plant according to Claim 7,
**characterized by**
a flow (21v) in the steam boiler (21), which is preheated by waste heat that is removed downstream of the heat exchanger (1) on the gas flow side and downstream of the clinker cooler (8) on the material flow side.

9. Plant according to either of Claims 6 and 7,
**characterized in that**
there is a control device for controlling the amount of process gas removed, wherein the final control element is a gas controller (23) in the cooled gas stream in a return line (22, 24).

10. Plant according to one of Claims 6 to 9,
**characterized in that**
there is a device for de-dusting (25) the process gas in the steam boiler (21).

## Revendications

1. Procédé pour l'utilisation de la chaleur perdue d'une installation de fabrication de ciment, la chaleur d'un gaz de processus étant utilisée par le biais d'un premier échangeur de chaleur (21) pour chauffer de la vapeur d'eau, et
l'installation de fabrication de ciment présentant au moins un calcinateur (2, 4) et au moins un deuxième échangeur de chaleur (1) qui se compose d'une succession de cyclones (la, 1b), pour chauffer de la farine crue,
**caractérisé en ce que**
le gaz de processus est prélevé
- à la sortie de gaz (10) du calcinateur (4), qui est disposée à l'extrémité inférieure de la branche montante (4) du calcinateur, et/ou
- à la sortie (11) côté gaz du premier cyclone (1b) dans la direction d'écoulement de gaz dans le deuxième échangeur de chaleur (1),
et après le prélèvement de la chaleur dans une chaudière à vapeur (21), le gaz de processus refroidi est recirculé dans le deuxième cyclone (1a) ou le troisième cyclone dans la direction d'écoulement de gaz dans le deuxième échangeur de chaleur (1).

2. Procédé selon la revendication 1,
**caractérisé par**
la recirculation, dans la chambre d'entrée de four rotatif (5) d'un four tubulaire rotatif (6) et/ou d'un broyeur de ciment, de la poussière séparée du gaz de processus dans le système de chaudière.

3. Procédé selon la revendication 1,
**caractérisé par**
la réunion de la chaleur du gaz de processus avec la chaleur perdue qui est prélevée du côté de l'écoulement de gaz après l'échangeur de chaleur (1) ou du côté du flux de matériau après le refroidisseur de clinker (8).

4. Procédé selon l'une quelconque des revendications 1 à 3,
**caractérisé par**
une régulation de la quantité de gaz de processus prélevé, l'organe de commande étant un régulateur de gaz (23) dans le flux de gaz refroidi dans une conduite de recirculation.

5. Procédé selon l'une quelconque des revendications 1 à 4,
**caractérisé par**
le dépoussiérage du gaz de processus dans la chaudière à vapeur (21).

6. Installation de fabrication de ciment, l'installation de fabrication de ciment présentant au moins un calcinateur (2, 4) et au moins un échangeur de chaleur (1) qui se compose d'une succession de cyclones (la, 1b) pour chauffer de la farine crue,
**caractérisée en ce qu'**
un point de prélèvement de gaz de processus (10, 11) est prévu
- à la sortie de gaz (10) du calcinateur (2) qui est disposée à l'extrémité inférieure de la branche montante (4) du calcinateur, et/ou
- à la sortie côté gaz (11) du premier cyclone (1a) dans la direction d'écoulement de gaz dans l'échangeur de chaleur (1), et
le point de prélèvement de gaz de processus (10, 11) conduit à une chaudière à vapeur (21) où la chaleur du gaz de processus est utilisée par le biais d'un échangeur de chaleur pour chauffer de la vapeur d'eau, et
une conduite de recirculation (24) pour le gaz de processus est prévue dans le deuxième cyclone (1b) ou le troisième cyclone dans la direction d'écoulement de gaz dans l'échangeur de chaleur (1).

7. Installation selon la revendication 6,
**caractérisée en ce**
**qu'**il est prévu une recirculation, dans la chambre d'entrée de four rotatif (5) d'un four tubulaire rotatif (6) et/ou d'un broyeur de ciment, de la poussière séparée du gaz de processus dans le système de chaudière.

8. Installation selon la revendication 7,
**caractérisée par**
une alimentation (21v) dans la chaudière à vapeur (21) qui est préchauffée par la chaleur perdue qui est prélevée du côté de l'écoulement de gaz après l'échangeur de chaleur (1) et/ou du côté du flux de matériau après le refroidisseur de clinker (8).

9. Installation selon l'une quelconque des revendications 6 à 7,
**caractérisée en ce**
**qu'**il est prévu un dispositif de réglage pour réguler la quantité de gaz de processus prélevé, l'organe de commande étant un régulateur de gaz (23) dans le flux de gaz refroidi dans une conduite de recirculation (22, 24).

10. Installation selon l'une quelconque des revendications 6 à 9,
**caractérisée en ce**
**qu'**il est prévu un dispositif de dépoussiérage (25) du gaz de processus dans la chaudière à vapeur (21).
